# DEMANDE DE BREVET EUROPEEN

(11) **EP 0 599 755 A1**
(43) Date de publication de la demande: **01.06.1994**
(21) Numéro de dépôt: 93440068.0
(22) Date de dépôt: 25.08.1993
(51) Int. Cl.: A01M 25/00

(54) **Dispositif de piège pour rongeurs, notamment pour rats, destiné à contenir des aliments empoisonnés**

(30) Priorité: 23.11.1992 FR 9214222
(71) Demandeur: Chappel, Bernard, F-74150 Vallieres (FR)
(72) Inventeur: Chappel, Bernard, F-74150 Vallieres (FR)
(74) Mandataire: Mayran, Ninon, Avocat

(57) **Abrégé**

Dispositif de piège pour rongeurs, notamment pour rats, destiné à contenir des aliments empoisonnés comportant un élément allongé (1) de section en U, ouvert à chacune de ses extrémités (13) et fermé par un couvercle (2).

Au fond (10) de l'élément inférieur (1) sont solidarisées, régulièrement espacées, des cloisons transversales (3) dont la hauteur permet le passage des rongeurs entre leurs bords supérieurs et le couvercle (2), lesdites cloisons transversales (3) délimitant des alvéoles (31, 32, 33, 34, 35) parmi lesquelles une alvéole (33) destinée à recevoir des aliments empoisonnés (4).

## Description

La présente invention a pour objet un dispositif de piège pour rongeurs, notamment pour rats, et plus particulièrement un nourrisseur contenant des aliments empoisonnés.

On connaît déjà des dispositifs permettant d'éliminer les rongeurs, mais ce sont pour la plupart des dispositifs mécaniques qui ne sont pas toujours efficaces.

Le procédé consistant à répandre des aliments empoisonnés est plus radical mais présente l'inconvénient, tout comme les dispositifs mécaniques, de ne pas être sélectif, c'est-à-dire que d'autres animaux peuvent en être victimes, et d'autre part ce procédé peut également présenter un risque pour l'être humain, notamment les enfants.

En effet les nourrisseurs existants, quand ils comportent un accès ne permettant l'entrée que d'une espèce de rongeurs, ne sont pas pourvus d'éléments empêchant les aliments empoisonnés d'être sortis desdits nourrisseurs, par exemple en restant collés aux pattes ou aux poils de l'animal.

La présente invention vise à remédier à ces inconvénients en proposant un dispositif de nourrisseur destiné à contenir des aliments empoisonnés, permettant d'éliminer les rongeurs, notamment les rats, sans risque que d'autres animaux, ni l'homme, ne puissent en être victimes.

Le dispositif objet de la présente invention est essentiellement constitué d'un élément intérieur allongé de section en U, qui peut être réalisé en tôle pliée, ouvert à ses deux extrémités, surmonté d'un couvercle et comportant intérieurement des cloisons transversales de hauteur inférieure à celle des parois latérales, créant des alvéoles, l'alvéole sensiblement centrale étant destinée à recevoir des aliments empoisonnés.

L'espace entre le sommet des cloisons et le couvercle, et la distance séparant l'alvéole centrale contenant les aliments empoisonnés des ouvertures sont tels que d'une part les rongeurs ne puissent atteindre ladite alvéole centrale qu'en rampant, et d'autre part que d'autres animaux, par exemple des oiseaux, ou la main d'un enfant ne puissent atteindre ladite alvéole centrale.

Lorsqu'un rongeur, attiré par les aliments, pénètre dans le piège, il se déplace jusqu'à une des alvéoles adjacentes à l'alvéole centrale, prend des aliments dans celle-ci et les mange, les rongeurs ayant la particularité de manger sur place et non d'emporter les aliments pour les manger ailleurs.

Quand le rongeur a fini de manger il sort du piège, et les éventuelles particules d'aliments restées collées à lui tombent lors du franchissement des cloisons transversales, raclées par celles-ci, en sorte qu'aucune particule d'aliment empoisonné n'est sortie du piège.

Avantageusement le couvercle est solidarisé à l'élément inférieur de façon à ne pouvoir pas être aisément enlevé, et il comporte en outre, préférentiellement, un moyen de verrouillage tel qu'un cadenas ou une goupille fendue reliée à une chaînette, empêchant des enfants par exemple d'ôter ledit couvercle.

Il est à noter que le dispositif selon l'invention peut être de dimensions plus réduites, et ne comporter qu'un seul accès, l'extrémité opposée à cet accès étant fermée par une paroi, l'alvéole destinée à contenir les aliments empoisonnés étant en ce cas disposée contre ladite paroi.

Les avantages et les caractéristiques de la présente invention ressortiront plus clairement de la description qui suit et qui se rapporte au dessin annexé, lequel en représente un mode de réalisation non limitatif.

Dans le dessin annexé :
- la figure 1 représente une vue en perspective d'un dispositif de nourrisseur selon l'invention.
- la figure 2 représente une vue en coupe longitudinale selon un plan vertical médian du même dispositif.

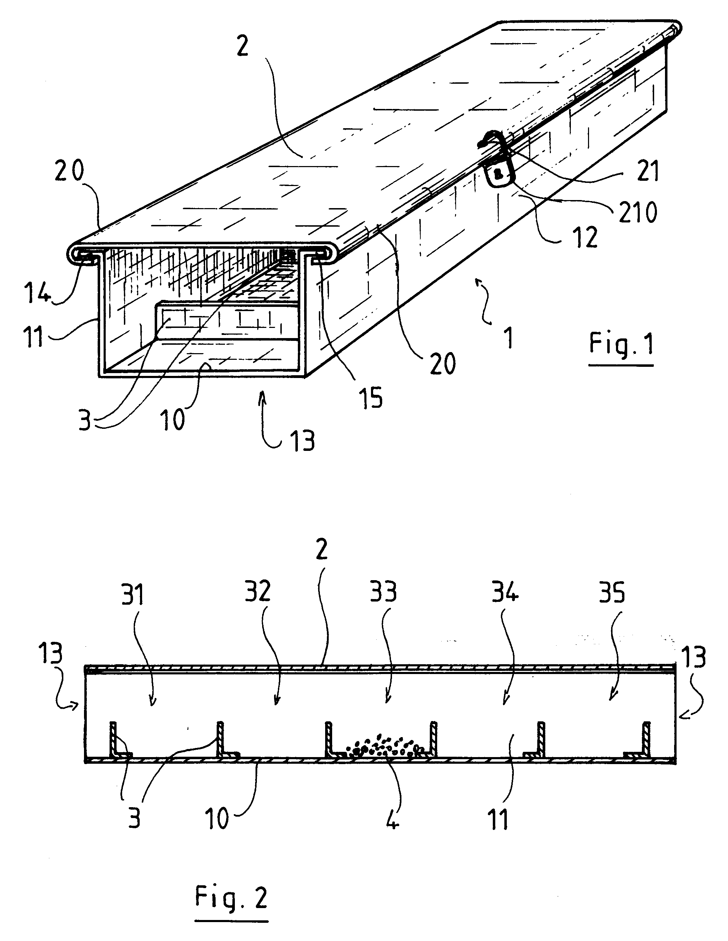

Si on se réfère à ces figures, on peut voir qu'un dispositif de piège, et plus particulièrement de nourrisseur, selon l'invention est essentiellement constitué d'une part d'un élément inférieur allongé 1 de section en U comportant un fond 10 et deux parois latérales verticales 11 et 12, ouvert à ses deux extrémités 13, dont une seule est visible sur la figure 1, et d'autre part d'un couvercle 2.

Le couvercle 2 est solidarisé à l'élément 1 par coulissement, ses bords latéraux 20 dans le sens longitudinal étant à cet effet pliés à 180°, et les parois latérales verticales 11 et 12 comportant à leurs extrémités supérieures des ailes horizontales, respectivement 14 et 15, dirigées vers l'extérieur, destinées à être introduites dans les bords latéraux 20 du couvercle 2.

Le couvercle 2 peut être verrouillé sur l'élément 1 au moyen d'un cadenas 210 , dont on introduit la tige dans trois orifices en regard, l'un 21 étant pratiqué dans le couvercle 2, un autre, non visible sur les figures, étant pratiqué dans l'aile 15, et le dernier, également non visible, étant pratiqué dans le bord plié 20 du couvercle 2.

L'élément inférieur 1 comporte intérieurement, solidarisées au fond 10, des cloisons verticales transversales 3 de hauteur sensiblement inférieure à la hauteur des parois latérales verticales 11 et 12, délimitant cinq alvéoles 31, 32, 33, 34 et 35, l'alvéole centrale 33 contenant des aliments empoisonnés 4.

Lorsqu'un rongeur pénètre dans le piège par l'une des ouvertures 13, il prend place dans l'alvéole 32 ou l'alvéole 34 pour manger les aliments empoisonnés 4. Quand il a fini de manger il sort du piège en escaladant les cloisons 3, qui retiennent les particules d'aliments 4 qui sont éventuellement restées accrochées à ses pattes ou à son corps, évitant ainsi que ces particules ne soient sorties du piège.

Pour des raisons de commodité, l'avéole destinée à contenir les aliments empoisonnés peut être de dimensions différentes des autres, par exemple plus grande.

Il va de soi que la présente invention ne saurait être limitée à la description qui précède d'un de ses modes de réalisation, susceptible de subir un certain nombre de modifications sans pour autant sortir du cadre de l'invention.

## Revendications

**1)** Dispositif de piège pour rongeurs, notamment pour rats, destiné à contenir des aliments empoisonnés, comportant un élément inférieur allongé (1) de section en U, ouvert à au moins une de ses extrémités (13) et fermé par un couvercle (2), caractérisé en ce qu'au fond (10) dudit élément inférieur (1) sont solidarisées, régulièrement espacées, des cloisons transversales (3) dont la hauteur permet le passage des rongeurs entre leurs bords supérieurs et le couvercle (2), lesdites cloisons transversales (3) délimitant des alvéoles (31, 32, 33, 34, 35) parmi lesquelles une alvéole (33) destinée à recevoir des aliments empoisonnés (4).

**2)** Dispositif selon la revendiction 1, caractérisé en ce qu'il est ouvert à ses deux extrémités (13) et en ce que l'alvéole (33) destinée à recevoir les aliments empoisonnés est l'alvéole centrale.

**3)** Dispositif selon la revendication 1, caractérisé en ce qu'il est ouvert à une seule de ses extrémités (13), l'alvéole (33) destinée à contenir les aliments empoisonnés étant positionnée à l'extrémité opposée, contre la paroi verticale de fermeture.

**4)** Dispositif selon l'une quelconque des revendications précédentes caractérisé en ce que le couvercle (2) et l'élément inférieur (1) sont munis d'un système de verrouillage de l'ensemble.
